# EUROPEAN PATENT SPECIFICATION

(11) **EP 2 496 627 B1**
(45) Date of publication and mention of the grant of the patent: **29.07.2015**
(21) Application number: 10776405.2
(22) Date of filing: 03.11.2010
(51) Int. Cl.: C08G 59/40, C08K 7/16, C08K 7/22

(54) **SYNTACTIC FOAM**
SYNTAKTISCHER SCHAUMSTOFF
MOUSSE SYNTHÉTIQUE

(30) Priority: 04.11.2009 GB 0919322
(43) Date of publication of application: 12.09.2012
(73) Proprietor: Hexcel Composites Limited, Cambridge, Cambridgeshire CB2 4QD (GB)
(72) Inventor: CLEAVER, Matthew, Haverhill Suffolk CB9 9QR (GB); LEWIS, Rhian, St Neots Cambridgeshire (GB)
(74) Representative: Pols, Ronald Maarten
(86) International application number: PCT/GB2010/051839
(87) International publication number: WO 2011/055141

(56) References cited:
- WO-A1-99/54372
- WO-A1-99/57182
- US-A1- 2007 032 575
- DATABASE WPI Week 199104 Thomson Scientific, London, GB; AN 1991-025246 XP002637300, & JP 2 294323 A (NIPPON PELNOX KK) 5 December 1990 (1990-12-05)

## Description

### Technical Field

The invention relates to a one-component syntactic foam curable at an elevated temperature with a low tendency to exotherm.

### Background

Materials known as syntactic foams find use in a number of technical areas, such as low density fillers and for repairing damage to composite material structures.

Syntactic foams derive their low densities from the hollow particles they contain which are dispersed within a structural matrix, typically of resin such as epoxy resin.

Syntactic foams are formed by curing a paste or putty-like material which comprises the uncured resin, curing agent, and hollow particles. Such curable materials are sometimes referred to as syntactic pastes.

To prevent the syntactic paste from prematurely curing before it is desired, the curing agent and resin can be physically separated and mixed together immediately prior to application of the paste. Such a product is known as a two-component syntactic paste.

However, mixing the two components together before use is cumbersome and time consuming. Therefore so-called one-component systems are greatly preferred. Such one-component systems involve the resin and curing agent to be together in the same paste and are prevented from reacting due to selection of a curing agent which is reactive only at an elevated temperature. One-component pastes may be stored at low temperatures and applied as desired. Once in place the paste is exposed to an elevated temperature and it cures to produce a syntactic foam.

However, a well-known hazard of such one-component systems is their tendency to exotherm. The presence of the hollow particles, often in very high quantities, tends to produce a material with a low thermal conductivity. As heat is generated during curing, this being an exothermic process, the internal temperature of the paste can rise uncontrollably and cause combustion of the material, a process called exotherming.

US 2007/0037575 discloses a room-temperature curing syntactic paste which is claimed to have a low tendency to exotherm and can be used to repair structures over large areas.

However, curing at low temperatures may result in inadequate mechanical properties of the cured syntactic foam e.g. due to incomplete curing. Addressing this by curing at elevated temperatures, e.g. above 80°C or even above 120°C and even as high as 175°C, appears to inevitably result in exotherming to the point of combustion with known syntactic pastes.

Thus a low density one-component syntactic paste with acceptable mechanical properties upon curing and a low tendency to exotherm would be highly desirable.

JP 2 294323 discloses a thermosetting putty composition.
WO 99/54372 discloses an adhesive an encapsulating material with fluxing properties. US 2007/032575 discloses a syntactic foam.
WO 99/57182 discloses epoxy-syntactic foam insulated metal pipes

### Summary of the invention

According to the invention there is provided a one component syntactic paste and a process of curing a syntactic paste as defined in any one of the accompanying claims.

In a first aspect, the invention relates to a one-component syntactic paste comprising epoxy resin, hollow particles and a hydrazide curing agent.

Such syntactic pastes are curable at an elevated temperature of at least 80°C without exotherming with a reasonable volume of material and also cure to produce a foam with excellent mechanical properties.

Additionally, such pastes can advantageously be cured over a range of temperatures, e.g. from 80°C to 190°C and provide good mechanical properties without significantly exotherming upon cure. Preferably they cure in the range of temperatures from 120°C to 175°C without exotherming.

The hollow particles may be rigid or flexible. They also typically have a small particle size with a mean particle size of from 10 to 200 micrometres.

As they are hollow, they have a low density, with a typical density being from 0.20 to 0.50 g/cm³.

In order for the syntactic paste to have a low material density it is preferred that a large proportion of it is made up of the hollow particles. Thus, the syntactic paste preferably comprises from 10 to 40 wt % of the hollow particles. On a volume basis the figures are much higher, with the syntactic paste preferably comprising from 40 to 90 % by volume the hollow particles.

By employing a sufficient quantity of hollow particles a light syntactic paste is obtainable. Thus, the syntactic paste preferably has a density of less than 0.80 g/cm³.

The epoxy resin may comprise monofunctional, difunctional, trifunctional and/or tetrafunctional epoxy resins.

Suitable difunctional epoxy resins, by way of example, include those based on; diglycidyl ether of Bisphenol F, Bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, or any combination thereof.

Difunctional epoxy resins may be preferably selected from diglycidyl ether of Bisphenol F, diglycidyl ether of Bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl ethers, epoxidised olefins, brominated resins, triglycidyl aminophenyls, aromatic glycidyl amines, heterocyclic glycidyl imidines and amides, glycidyl ethers, fluorinated epoxy resins, or any combination thereof.

Suitable tetrafunctional epoxy resins include N,N,N',N'-tetraglycidyl-m-xylenediamine (available commercially from Mitsubishi Gas Chemical Company under the name Tetrad-X, and as Erisys GA-240 from CVC Chemicals).

The epoxy resin may be present in the syntactic paste at a level of from 30 to 60 wt %.

In order for the hydrazide to be able to cure it must be in liquid form. Thus, the hydrazide preferably has a melting temperature of less than 175°C, more preferably less than 150°C, most preferably less than 125°C.

The hydrazide may comprise a monohydrazide, dihydrazide, trihydrazide or tetrahydrazide. Dihydrazides and trihydrazides are preferred, particularly dihydrazides.

Suitable hydrazides include, but are not limited to, 2,4-dihydroybenzoic acid hydrazide, oxalyl dihydrazide, 4-amino benzoic hydrazide, isophthalic dihydrazide, sebastic acid dihydrazide, adipic acid dihydrazide, icosanedioic acid dihydrazide, succinic dihydrazide, 3-fluorobenzoic hydrazide, valine dihydrazide, toluene sulphonic acid and 2-furoic hydrazide.

Preferably the hydrazide is selected from the list consisting of sebastic acid dihydrazide, adipic acid dihydrazide, icosanedioic acid dihydrazide, succinic dihydrazide, 3-fluorobenzoic hydrazide, valine dihydrazide, toluene sulphonic acid and 2-furoic hydrazide.

More preferably the hydrazide is selected from the list consisting of succinic dihydrazide, 3-fluorobenzoic hydrazide, valine dihydrazide, toluene sulphonic acid and 2-furoic hydrazide. Succinic dihydrazide and valine dihydrazide are most preferred. Most highly preferred is valine dihydrazide.

The hydrazide may be present in the syntactic paste at a level of from 5 to 20 wt %.

Epoxy resin curing systems are often characterised by the amine:epoxy ratio, or A:E ratio. This is the ratio of the number of active hydrogen groups (with hydrazides having two active hydrogens per hydrazide group) to the number of epoxy groups.

For conventional epoxy curing systems, an A:E ratio of 1:1 might provide the most effective curing regime as all the epoxy groups have an active hydrogen group to react with. However, in the present case it has been found that further improvements in mechanical properties can be achieved with an A:E ratio which deviates from 1:1.

Thus, the A:E ratio of from 1:0.6 to 1:0.7 is particularly preferred.

It has been found that accelerators may contribute to exotherm behaviour, especially at the higher curing temperature. Thus, preferably the syntactic paste comprises less than 1.0 wt % accelerator, more preferably less than 0.5 wt % and most preferably is substantially free of accelerator.

The syntactic paste also desirably includes a flame retardant material, such as ammonium polyphosphate, red phosphorous or organophosphorous compounds, e.g. an ammonium polyphosphate such as Exolit AP 462 (Trade Mark) obtainable from Clariant. The flame retardant may be present in the syntactic paste at a level of from 5 to 20 wt %.

The syntactic paste also desirably includes particulate filler material. This tends to prevent the hollow particles from phase-separating due to their low density as the paste heats up at the initial stages of curing. Suitable fillers include silica based materials and may be present at a level of from 0.5 to 3.0 wt %.

As mentioned above, the tendency of a material to exotherm may be diminished by ensuring that only small quantities of material are cured. This enables the heat to transfer to the outer surface more quickly, thus preventing build-up of heat internally.

However, most applications require larger amounts of material to be cured together, for example to repair a wider range of sizes of holes in a composite material. Thus, the syntactic paste preferably has a mass of at least 100g, more preferably at least 300 g.

The syntactic pastes of the present invention have a particularly low tendency to exotherm and a 100 g mass of the paste will exotherm by less than 70°C, preferably less than 50°C, or even less than 30°C. The exotherm is defined as the temperature of the paste minus the temperature of the environment.

Alternatively, the tendency of a material may be diminished if the paste has a high surface-to-volume ratio. Thus an amount of paste with a surface-to-volume ratio of 2.0 cm²/cm³ will exotherm by less than 70°C, preferably less than 50°C, or even less than 30°C.

It is particularly beneficial if the temperature of the paste does not exceed 195°C even when the environment is as hot as 175°C, and particularly at all environment temperatures in the range of from 120°C to 175°C.

It is highly desirable to have a paste which cures over a range of temperatures whilst still providing good mechanical properties and not exotherming throughout the range of temperatures.

As mentioned above, the lowest temperature at which a hydrazide can begin to cure effectively is at its melting temperature. The highest temperature at which it can cure is governed by its tendency to exotherm. Thus the greater the difference between these two temperature limits, the wider the range of applications the paste can be applied to. Thus, the paste preferably cures over a temperature range of at least 20°C, preferably at least 30°C, more preferably at least 40°C, or even at least 50°C.

Also as discussed above, it is preferred that it can do this by exotherming by less than 70°C, preferably less than 50°C, more preferably less than 30°C.

The syntactic paste is manufactured typically by simply blending or admixing the constituent materials together. The paste is then stored at a low temperature, typically below 5°C to prevent any premature curing.

When it is desired to employ the syntactic paste, the paste is applied, e.g. to fill a sandwich panel of an aircraft or to repair a damaged composite material. The structure comprising the paste is then heated up to an elevated temperature to cure the syntactic paste.

Thus, in a further aspect, the invention relates to a process of curing a syntactic paste as defined herein, comprising heating the paste by exposing it to an environment at a temperature of at least 80°C to produce a cured syntactic foam.

As mentioned, the paste has a low tendency to exotherm and thus the temperature of the paste preferably does not exceed 70°C greater than the environment temperature, more preferably does not exceed 50°C greater and most preferably does not exceed 30°C greater.

Preferably the environment temperature is at least 100°C, more preferably at least 125°C, most preferably at least 150°C.

The cured syntactic foam desirably has a high compressive strength. Preferably it has a compressive strength at room temperature of at least 16 Nmm⁻², more preferably at least 25 Nmm⁻².

The syntactic paste is suitable for use in a variety of applications. However it is of particular utility where a low density adhesive material is desired. Thus in a preferred embodiment, the process includes the step of applying the paste to an aircraft sandwich panel before curing.

The invention will now be illustrated with reference to the following figures, in which:
Figure 1 is a chart of temperature against time where Examples 37 to 39 are cured at 120°C.
Figure 2 is a chart of temperature against time where Examples 37 to 39 are cured at 175°C.
Figure 3 is a chart of temperature against time where Examples 40 to 45 are cured at 120°C.
Figure 4 is a chart of temperature against time where Examples 40 to 45 are cured at 175°C.

### Examples

A series of syntactic pastes were manufactured and a mass of 100 g of each paste was cured at 120°C and also at 175°C. The pastes were formed into cylinder shapes with diameters fixed at 11.0 cm, providing a surface-to-volume ratio of 1.70 cm²/cm³. The formulations and the results are shown below.

Examples 36, 41, 42, 43 and 45 to 49 are examples according to the invention.

The behaviour upon curing is measured according to the following scale.
1. Well scorched - obvious exotherm due to odour and colour.
2. Less scorched - slight odour of exotherm.
3. Off- white but well cured - no evidence of exotherm.
4. White - fully cured and solid.
5. Not fully cured - slightly soft.
6. Very undercured - soft.

- Δ: Indicates bubbling at surface.
- +: Indicates segregation during curing.

A score of 3 or 4 at both 120°C and 175°C with no bubbling or segregation is a success.

**Table 1**

| **Type** | **Material** | **1** | **2** | **3** | **4** | **5** | **6** | **7** | **8** | **9** | **10** | **11** | **12** |
|---|---|---|---|---|---|---|---|---|---|---|---|---|---|
| Epoxy | DLS 772 | 52 | 52.5 | 53 | 53.5 | 54 | 54.5 | 55 | 55.5 | 56 | 56.5 | 56 | 55.5 |
| | Epikote 828 | | | | | | | | | | | | |
| Hollow Particles | Nanolite 37 c2 | 27.5 | 27.5 | 27.5 | 27.5 | 27.5 | 27.5 | 27.5 | 27.5 | 27.5 | 27.5 | 27.5 | 27.5 |
| Curing Agent | Dicyandiamide | 6 | 5.5 | 5.5 | 5 | 5 | 4.5 | 4.5 | 4 | 4 | 3 | 3 | 3 |
| | MMIPA | | | | | | | | | | | | |
| | MDEA | | | | | | | | | | | | |
| | MCDEA | | | | | | | | | | | | |
| | VDH | | | | | | | | | | | | |
| | TSAH | | | | | | | | | | | | |
| | MZ Azine | | | | | | | | | | | | |
| Accelerator | Dyhard UR500 | 2.5 | 2.5 | 2 | 2 | 1.5 | 1.5 | 1 | 1 | 0.5 | 1 | 1.5 | 2 |
| Flame Retardant | Exolit AP462 | 12 | 12 | 12 | 12 | 12 | 12 | 12 | 12 | 12 | 12 | 12 | 12 |
| Silica particles | Cab-O-Sil TS720 | | | | | | | | | | | | |
| | A:E ratio | | | | | | | 1:0.84 | 1:0.74 | 1:0.73 | 1:0.57 | 1:0.59 | 1:0.61 |
| Curing at 120C | | 5 | 5 | 5 | 5 | 5 | 5 | 5 | 5 | 5 | 4 | 4 | 4 |
| Curing at 175C | | 1 | 1 | 1 | 1 | 1 | 1 | 1 | 1 | 1 | 1 | 1 | 1 |

**Table 2**

| **Type** | **Material** | **13** | **14** | **15** | **16** | **17** | **18** | **19** | **20** | **21** | **22** | **23** | **24** |
|---|---|---|---|---|---|---|---|---|---|---|---|---|---|
| Epoxy | DLS 772 | 55.5 | 56.5 | 55.5 | 57 | 56.5 | 57 | 56.5 | 50.8 | 50.8 | 48.5 | 44.2 | 49.36 |
| | Epikote 828 | | | | | | | | | | | | |
| Hollow Particles | Nanolite 37 c2 | 27.5 | 27.5 | 27.5 | 27.5 | 27.5 | 27.5 | 27.5 | 27 | 27 | 27 | 27 | 27 |
| Curing Agent | Dicyandiamide | 3 | 2 | 0 | 1.5 | 1.5 | 1 | 1 | | | | | |
| | MMIPA | | | | | | | | 10.2 | | | | |
| | MDEA | | | | | | | | | 10.2 | | | 5 |
| | MCDEA | | | | | | | | | | 12 | 16 | 6.14 |
| | VDH | | | | | | | | | | | | |
| | TSAH | | | | | | | | | | | | |
| | MZ Azine | | | | | | | | | | | | |
| Accelerator | Dyhard UR500 | 2 | 2 | 5 | 2 | 2.5 | 2.5 | 3 | | | | | |
| Flame Retardant | Exolit AP462 | 12 | 12 | 12 | 12 | 12 | 12 | 12 | 12 | 12 | 12 | 12.5 | 12.5 |
| Silica particles | Cab-O-Sil TS720 | | | | | | | | | | | | |
| | A:E ratio | 1:0.61 | 1:0.42 | 1:0.13 | 1:0.32 | 1:0.34 | 1:0.24 | 1:0.26 | 1:0.50 | 1:0.50 | 1:0.50 | 1:0.75 | 1:0.5 |
| Curing at 120C | | 4 | 4 | 4 | 4 | 2 | 4 | 2 | 3^{Δ} | 4^{Δ} | 6 | 5 | 5 |
| Curing at 175C | | 1 | 2 | 1 | 1 | 1 | 1 | 1 | 3^{Δ} | 2^{Δ} | 3 | 3 | 3 |

**Table 3**

| **Type** | **Material** | **25** | **26** | **27** | **28** | **29** | **30** | **31** | **32** | **33** | **34** | **35** | **36** |
|---|---|---|---|---|---|---|---|---|---|---|---|---|---|
| Epoxy | DLS 772 | 48 | 48.3 | 48.43 | 49 | 50 | 49.5 | 48.5 | 47.5 | 49.91 | 50.41 | 50.8 | |
| | Epikote 828 | | | | | | | | | | | | 44.57 |
| Hollow Particles | Nanolite 37 c2 | 27 | 27 | 27.5 | 27.5 | 27.5 | 27.23 | 26.68 | 26.13 | 27.23 | 27.23 | 27.23 | 27 |
| Curing Agent | Dicyandiamide | | | | | | | | | | | | |
| | MMIPA | | | | | | | | | | | | |
| | MDEA | | | 9.06 | | | | | | | | | |
| | MCDEA | 10.5 | 11.2 | 2.51 | 10 | 9 | 8.91 | 8.73 | 8.55 | 8.5 | 8 | 8 | 12.04 |
| | VDH | | | | | | | | | | | | 3.01 |
| | TSAH | | | | | | | | | | | | |
| | MZ Azine | | | | | | | | | | | | |
| Accelerator | Dyhard UR500 | 2 | 1 | | 1 | 1 | 0.99 | 0.97 | 0.95 | 0.99 | 0.99 | 0.6 | |
| Flame Retardant | Exolit AP462 | 12.5 | 12.5 | 12.5 | 12.5 | 12.5 | 12.38 | 12.13 | 11.88 | 12.38 | 12.38 | 12.38 | 12.8 |
| Silica particles | Cab-O-Sil TS720 | | | | | | 1 | 3 | 5 | 1 | 1 | 1 | 1 |
| | A:E ratio | 1:0.5 | 1:0.5 | 1:0.5 | 1:0.44 | 1:0.39 | 1:0.39 | 1:0.39 | 1:0.39 | 1:0.37 | 1:0.35 | 1:0.34 | 1:0.70 |
| Curing at 120C | | 3 | 3⁺ | 5 | 3⁺ | 3⁺ | 4 | 4 | 4 | 5 | 5 | 6 | 5 |
| | | 1 | 1⁺ | 3 | 2⁺ | 2⁺ | 3 | 3 | 2 | 2^{Δ} | 3^{Δ} | 3^{Δ} | 3 |

**Table 4**

| **Type** | **Material** | **37** | **38** | **39** | **40** | **41** | **42** | **43** | **44** | **45** | **46** | **47** | **48** | **49** |
|---|---|---|---|---|---|---|---|---|---|---|---|---|---|---|
| Epoxy | DLS 772 | | | | | | | | | | | | | |
| | Epikote 828 | 45.62 | 50 | 53.54 | 46 | 46.5 | 45.5 | 46.5 | 58.25 | 49.92 | 49.62 | 47.97 | 46.42 | 47.22 |
| Hollow Particles | Nanolite 37 c2 | 27 | 27 | 27 | 27 | 27 | 27 | 27 | 27 | 27 | 27 | 27 | 27 | 27 |
| Curing Agent | Dicyandiamide | | | | | | | | | | | | | |
| | MMIPA | | | | | | | 6.75 | | | | | | |
| | MDEA | | | 10.3 | | 6.75 | | | | | | | | |
| | MCDEA | | 8.5 | | | | 7.25 | | | | | | | |
| | VDH | 14 | | | | 6.75 | 7.25 | 6.75 | | 10.07 | 10 | 11.65 | 13.2 | 12.4 |
| | TSAH | | | | 14 | | | | | | | | | |
| | MZ Azine | | | | | | | | 1.748 | | | | | |
| Accelerator | Dyhard UR500 | | 1 | | | | | | | | | | | |
| Flame Retardant | Exolit AP462 | 12 | 12 | 12 | 12.38 | 12 | 12 | 12 | 12 | 12 | 12.38 | 12.38 | 12.38 | 12.38 |
| Silica particles | Cab-O-Sil TS720 | 1 | 1 | 1 | 1 | 1 | 1 | 1 | 1 | 1 | 1 | 1 | 1 | 1 |
| | A:E ratio | 1:0.76 | 1:0.36 | 1:0.5 | 1:0.70 | 1:0.76 | 1:0.36 | 1:0.5 | 1:0.14 | 1:0.50 | 1:0.50 | 1:0.61 | 1:0.70 | 1:0.65 |
| Curing at 120C | | 4 | 5 | 4 | 4 | 4 | 5 | 4 | 4^{Δ} | 4 | 4 | 4 | 4 | 4 |
| Curing at 175C | | 3 | 3 | 2 | 3^{Δ} | 2^{Δ} | 2^{Δ} | 2^{Δ} | 4^{Δ} | - | 3 | 3 | 3 | 3 |

DLS772 - Diglycidyl ether of Bisphenol A (DGEBA). Supplied by Huntsman.
Epikote 828 - Diglycidyl ether of Bisphenol A (DGEBA). Supplied by Shell.
Exolit AP462 - Encapsulated ammonium polyphosphate. Supplied by Clariant GmbH
Nanolite 37 c2 - 45 micron amine coated microballoons. Supplied by Ecka
Dicy - Dicyandiamide. Supplied SKW Trostberg
Dyhard UR500 - N,N'-(4-Methyl-m-phenylene)bis(N',N'-dimethylurea). Supplied by SKW Trostberg
MMIPA - 4,4'-Methylene bis(2-isopropyl-6-methylaniline). Supplied by Lonza Ltd.
MDEA - 4,4'-Methylene bis(2,6-diethylaniline). Supplied by Lonza Ltd.
MCDEA - 4,4'-Methylene bis(3-chloro-2,6-diethylaniline). Supplied by Lonza Ltd.
pTSAH - Para Toluene sulphonic acid. Supplied by Chance and Hunt.
2 MZ Azine-S - 6-[2-(Methylimidazole)ethyl]-1,3,5-triazine-2,4-diamine. Supplied by Anchor Chemical Ltd.
VDH - Valine dihydrazide. Supplied by Ajinomoto
Cab-O-Sil TS720 - surface modified fumed silica particles. Supplied by Cabot.

Examples 1 to 19 show how a known epoxy curing system, dicyandiamide and the urone accelerator UR500 was unable to produce a syntactic paste which cured at both 120°C and 175°C without exotherming regardless of the amount of material employed.

Examples 20 to 24 show how other, less reactive curatives than dicyandiamide were tested. However none of the combinations could provide satisfactory curing at both 120°C to 175°C. The curing agent MCDEA showed some promise but was not reactive enough at 120°C. Examples 25 to 29 involved enhancing the MCDEA with the urone accelerator UR500. However none of these were satisfactory at both 120°C and 175°C either. Furthermore, some of the formulations phase-separated which would produce very poor mechanical properties in the cured foam. Addition of particulate silica in examples 30 to 35 solved the phase separation problem, however none of the formulations were able to cure satisfactorily at both 120°C and 175°C.
Examples 36 to 39 were then tested. Although all four examples produced better results overall than earlier examples, the ones containing valine dihydrazide performed the best. Example 37 which contained valine dihydrazide as the sole curing agent, was the best overall performer.

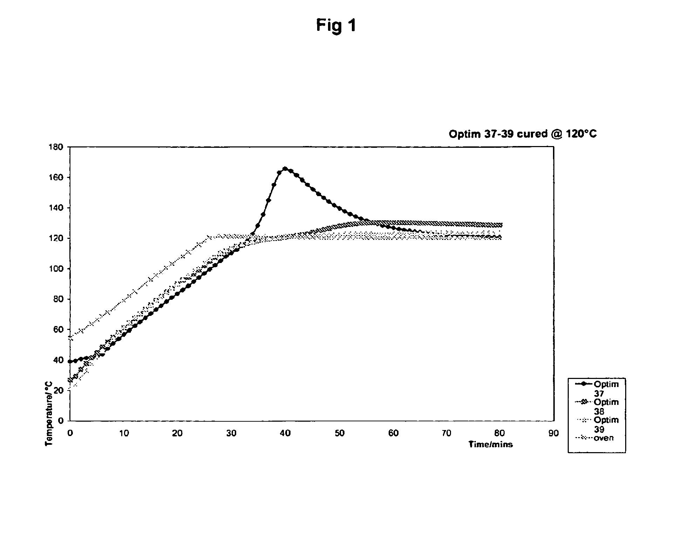

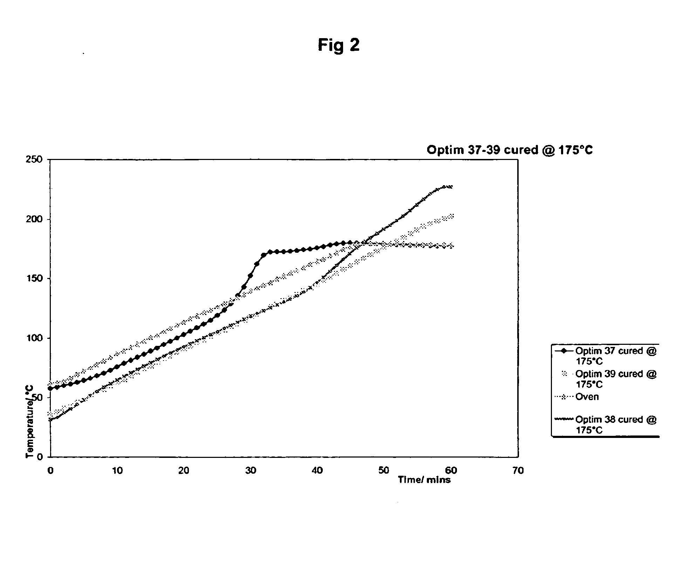

The rise in temperature of examples 37 to 39 as curing took place is shown in Figures 1 and 2. It can be seen that Example 37 increased in temperature by 45° in excess of the 120°C environment temperature and never exceeded the 175°C environment temperature.

Examples 40 to 45 were carried out to explore other curing agents similar to valine dihydrazide. All of these examples produced good curing results at both 120°C and 175°C. The compressive tests carried out on the cured foams showed that Examples 41 to 44 were acceptable. However Example 44 was clearly the best of this series.

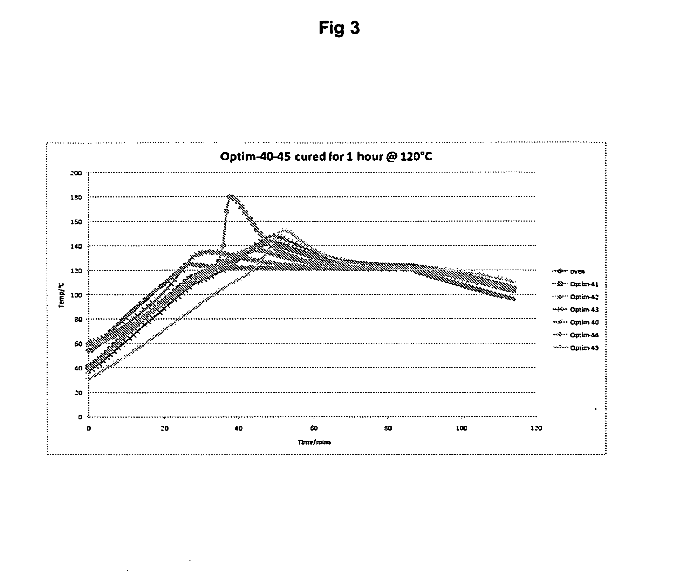

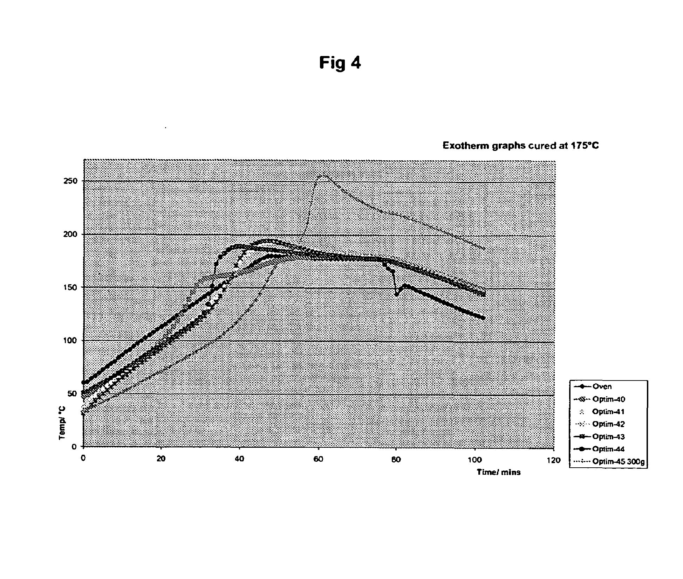

The rise in temperature of Examples 40 to 45 as curing took place is shown in Figures 3 and 4. It can be seen that Example 44 increased in temperature by 60°C in excess of the 120°C environment temperature and only increased by 10°C in excess of the 175°C environment.

Examples 46 and 49 explore the effect of the A:E ratio when valine dihydrazide is the sole curative. All cured well at both 120°C and 175°C with no exotherm problems.

The compressive strength (MPa) of the resulting foams was tested and the results are shown in Table 5.

**Table 5**

| **Curing regime** | **46** | **47** | **48** | **49** |
|---|---|---|---|---|
| 120°C (for 1 hr) | 31 | 39 | 37 | 48 |
| 175°C (for ½ hr) | 38 | 50 | 43 | 44 |

It can be seen that an A:E ratio of 1:0.65 in Example 49 provides optimal results.

## Claims

1. A one-component syntactic paste comprising epoxy resin, hollow particles, a hydrazide curing agent, and a flame retardant material at a level of from 5 to 20 wt%, wherein the ratio of active hydrogen groups (A) to epoxy groups (E) is from 1:0.6 to 1:0.7.

2. A syntactic paste according to claim 1, wherein the hollow particles have a density of from 0.20 to 0.50 g/cm³.

3. A syntactic paste according to any one of the preceding claims, which comprises from 10 to 40 wt % of the hollow particles.

4. A syntactic paste according to any one of the preceding claims, which has a density of less than 0.80 g/cm³.

5. A syntactic paste according to any one of the preceding claims, comprising epoxy resin at a level of from 30 to 60 wt %.

6. A syntactic paste according to any one of the preceding claims, wherein the hydrazide has a melting temperature of less than 175°C.

7. A syntactic paste according to any one of the preceding claims, wherein the hydrazide comprises valine dihydrazide.

8. A syntactic paste according to any one of the preceding claims, wherein the hydrazide is present at a level of from 5 to 20 wt %.

9. A syntactic paste according to any one of the preceding claims which cures over a temperature range of at least 50°C from the melting temperature of the hydrazide.

10. A syntactic paste according to any one of the preceding claims wherein the temperature of the paste does not exceed 195°C during curing at environment temperatures from 120°C to 175°C.

11. A process of curing a syntactic paste according to any one of the preceding claims, comprising heating the paste by exposing it to an environment at a temperature of at least 80°C to produce a cured syntactic foam.

12. A process according to claim 11, wherein the environment temperature is at least 100°C.

13. A process according to claim 11 or 12, which includes the step of applying the paste to an aircraft sandwich panel or to repair a damaged composite material before curing.

## Patentansprüche

1. Einkomponentige syntaktische Paste, umfassend Epoxidharz, hohle Teilchen, ein Hydrazid-Härtungsmittel und ein Flammschutzmittel in einem Anteil von 5 bis 20 Gew.-%, wobei das Verhältnis von aktiven Wasserstoff enthaltenden Gruppen (A) zu Epoxidgruppen (E) 1:0,6 bis 1:0,7 beträgt.

2. Syntaktische Paste nach Anspruch 1, wobei die hohlen Teilchen eine Dichte von 0,20 bis 0,50 g/cm³ aufweisen.

3. Syntaktische Paste nach einem der vorhergehenden Ansprüche, die 10 bis 40 Gew.-% der hohlen Teilchen umfasst.

4. Syntaktische Paste nach einem der vorhergehenden Ansprüche, die eine Dichte von weniger als 0,80 g/cm³ aufweist.

5. Syntaktische Paste nach einem der vorhergehenden Ansprüche, umfassend Epoxidharz in einem Anteil von 30 bis 60 Gew.-%.

6. Syntaktische Paste nach einem der vorhergehenden Ansprüche, wobei das Hydrazid eine Schmelztemperatur von weniger als 175°C aufweist.

7. Syntaktische Paste nach einem der vorhergehenden Ansprüche, wobei das Hydrazid Valindihydrazid umfasst.

8. Syntaktische Paste nach einem der vorhergehenden Ansprüche, wobei das Hydrazid in einem Anteil von 5 bis 20 Gew.-% vorliegt.

9. Syntaktische Paste nach einem der vorhergehenden Ansprüche, die über einen Temperaturbereich von mindestens 50°C ab der Schmelztemperatur des Hydrazids härtet.

10. Syntaktische Paste nach einem der vorhergehenden Ansprüche, wobei die Temperatur der Paste bei der Härtung bei Umgebungstemperaturen von 120°C bis 175°C nicht über 195°C hinausgeht.

11. Verfahren zum Härten einer syntaktischen Paste nach einem der vorhergehenden Ansprüche, bei dem man die Paste erhitzt, indem man sie einer Umgebung bei einer Temperatur von mindestens 80°C aussetzt, um einen gehärteten syntaktischen Schaum herzustellen.

12. Verfahren nach Anspruch 11, bei dem die Umgebungstemperatur mindestens 100°C beträgt.

13. Verfahren nach Anspruch 11 oder 12, das den Schritt des Aufbringens der Paste auf ein Flugzeugsandwichpaneel oder zur Reparatur eines beschädigten Verbundwerkstoffs vor dem Härten umfasst.

## Revendications

1. Pâte syntactique monocomposant comprenant une résine époxy, des particules creuses, un durcisseur à base d'hydrazide, et un matériau ignifugeant à un niveau de 5 à 20 % en poids, le rapport entre groupes hydrogène actifs (A) et groupes époxy (E) étant de 1:0,6 à 1:0,7.

2. Pâte syntactique selon la revendication 1, dans laquelle les particules creuses ont une densité de 0,20 à 0,50 g/cm³.

3. Pâte syntactique selon l'une quelconque des revendications précédentes, qui comprend de 10 à 40 % en poids des particules creuses.

4. Pâte syntactique selon l'une quelconque des revendications précédentes, qui a une densité inférieure à 0,80 g/cm³.

5. Pâte syntactique selon l'une quelconque des revendications précédentes, comprenant la résine époxy à un niveau de 30 à 60 % en poids.

6. Pâte syntactique selon l'une quelconque des revendications précédentes, dans laquelle l'hydrazide a une température de fusion de moins de 175 °C.

7. Pâte syntactique selon l'une quelconque des revendications précédentes, dans laquelle l'hydrazide comprend du dihydrazide de valine.

8. Pâte syntactique selon l'une quelconque des revendications précédentes, dans laquelle l'hydrazide est présent à un niveau de 5 à 20 % en poids.

9. Pâte syntactique selon l'une quelconque des revendications précédentes qui durcit sur une plage de températures d'au moins 50 °C depuis la température de fusion de l'hydrazide.

10. Pâte syntactique selon l'une quelconque des revendications précédentes, la température de la pâte ne dépassant pas 195 °C pendant le durcissement à des températures ambiantes de 120 °C à 175 °C.

11. Procédé de durcissement d'une pâte syntactique selon l'une quelconque des revendications précédentes, comprenant le chauffage de la pâte par son exposition à une température d'au moins 80 °C pour produire une mousse syntactique durcie.

12. Procédé selon la revendication 11, dans lequel la température ambiante est d'au moins 100 °C.

13. Procédé selon la revendication 11 ou 12, qui comporte l'étape d'application de la pâte à un panneau sandwich d'aéronef ou pour réparer un matériau composite endommagé avant durcissement.
